# EUROPÄISCHE PATENTSCHRIFT

(11) **EP 1 735 196 B1**
(45) Veröffentlichungstag und Bekanntmachung des Hinweises auf die Patenterteilung: **15.05.2013**
(21) Anmeldenummer: 05729673.3
(22) Anmeldetag: 17.03.2005
(51) Int. Cl.: B60S 1/04, B60S 1/34

(54) **SCHEIBENWISCHVORRICHTUNG**
WINDSCREEN WIPER DEVICE
SYSTEME D'ESSUIE-GLACE

(30) Priorität: 06.04.2004 DE 102004016918
(43) Veröffentlichungstag der Anmeldung: 27.12.2006
(73) Patentinhaber: ROBERT BOSCH GMBH, 70442 Stuttgart (DE)
(72) Erfinder: KRAUS, Achim, 77815 Buehl (DE); SCHABANEL, François, F-94100 Saint Maux des Fossés (FR)
(86) Internationale Anmeldenummer: PCT/EP2005/051248
(87) Internationale Veröffentlichungsnummer: WO 2005/097567

(56) Entgegenhaltungen:
- FR-A- 2 746 743
- FR-A- 2 754 227
- FR-A- 2 783 479
- US-A- 3 419 299
- US-A- 4 856 137
- PATENT ABSTRACTS OF JAPAN Bd. 2003, Nr. 03, 5. Mai 2003 (2003-05-05) -& JP 2002 337669 A (ASMO CO LTD), 27. November 2002 (2002-11-27)
- PATENT ABSTRACTS OF JAPAN Bd. 2000, Nr. 26, 1. Juli 2002 (2002-07-01) -& JP 2001 260822 A (MITSUBA CORP), 26. September 2001 (2001-09-26)

## Beschreibung

Die Erfindung betrifft eine Scheibenwischvorrichtung, insbesondere für ein Kraftfahrzeug, mit mindestens einem Befestigungsteil zur Befestigung eines Wischarms auf einer Wischerwelle.

Fußgänger sind beim Zusammenstoß mit Fahrzeugen völlig ungeschützt. Besonders die unnachgiebigen, harten Teile unterhalb einer Motorhaube führen oft zu schweren Verletzungen beim Aufprall eines Fußgängers auf ein Fahrzeug. Die Scheibenwischvorrichtung befindet sich in einem Bereich, in dem Fußgänger beim Aufprall auf ein Fahrzeug häufig auftreffen. Die allgemein aus dem Stand der Technik bekannten Scheibenwischvorrichtungen haben den Nachteil, dass sie eine große Verletzungsgefahr für den Fußgänger beim Aufprall auf das Fahrzeug darstellen. Deshalb fordern die Fahrzeughersteller einen Mindestabstand von 65 bis 85 Millimetern zwischen der Motorhaube und einem Wischerantrieb. Zu diesem Zweck wird der Abstand der Wischerwelle vom unteren Rand einer Windschutzscheibe vergrößert. Während des Wischbetriebs befindet sich jedoch das Befestigungsteil außerhalb der Parklage 10 Millimeter über der Windschutzscheibe. Beim Aufprall eines Fußgängers auf die Scheibenwischvorrichtung kann diese also nicht mehr als 10 Millimeter nachgeben, weil dann das Befestigungsteil auf der Windschutzscheibe aufsitzt. Dieser Verformungsweg ist jedoch zu gering, um die Verletzungsgefahr des Fußgängers zu reduzieren.

Aus JP 2002-337669 ist eine Scheibenwischvorrichtung für ein Kraftfahrzeug bekannt, wobei die Scheibenwischvorrichtung ein Befestigungsteil zur Befestigung eines Wischarms auf einer Wischerwelle aufweist. Das Befestigungsteil ist über Auskragungen und Einbuchtungen mit der Wischerwelle verbunden.

Auch die weiteren Dokumente FR-A-2754227, US-A-4856137 und FR-A-2746743 beschreiben entsprechende Scheibenwischvorrichtungen.

Aus JP 2001-260822 A ist eine Scheibenwischvorrichtung für ein Kraftfahrzeug bekannt, die mindestens ein Befestigungsteil zur Befestigung eines Wischarms auf einer Wischerwelle aufweist. Das Befestigungsteil weist ein auf die Wischerwelle aufgesetztes Rohrelement und ein Verbindungselement auf. Das Verbindungselement ist an einem Ende mit einem Wischarm und am anderen Ende lösbar mit dem Rohrelement verbunden.

Auch das Dokument FR-A-2783479 A1 beschreibt eine entsprechende Scheibenwischvorrichtung.

Die Erfindung hat die Aufgabe, eine Scheibenwischvorrichtung der eingangs genannten Art dahingehend zu verbessern, dass zukünftig die Verletzungsgefahr für einen Fußgänger beim Aufprall auf das Fahrzeug reduziert wird.

Die Erfindung löst die gestellte Aufgabe durch eine Scheibenwischvorrichtung mit den Merkmalen des Anspruchs 1.

Je nach dem in welchem Winkel der Fußgänger auf das Befestigungsteil aufprallt, kann das Befestigungsteil nach dem Brechen der Sollbruchstelle entweder über die Wischerwelle geschoben werden oder quer zu Wischerwelle ausweichen.

In einer konstruktiv einfachen Ausgestaltung kann das Befestigungsteil einen Hohlzylinder aufweisen, der auf die Wischerwelle aufgesetzt ist.

Der Hohlzylinder kann an einer der Wischerwelle zugewandten Stirnseite eine umlaufende Sollbruchstelle aufweisen. Beim Aufprall des Fußgängers wird mindestens ein Teil der Stirnseite aus dem Hohlzylinder herausgebrochen.

Damit der Hohlzylinder an der Sollbruchstelle unabhängig vom Aufprallwinkel zuverlässig versagt, kann er eine umlaufende Rille sein. Um ein Brechen an der Sollbruchstelle schon bei geringen Aufprallkräften sicherzustellen, kann sich die Rille zu ihrem Rillengrund hin verjüngen.

Damit ein Drehmoment von der Wischerwelle über das Befestigungsteil auf den Wischarm übertragen werden kann, kann das Befestigungsteil eine konische Bohrung aufweisen, in die ein kegelförmiges Ende der Wischerwelle gesteckt werden kann. Damit die konische Bohrung feste gegen das kegelförmige Ende der Wischerwelle gedrückt wird, kann eine Verschraubung vorgesehen sein.

Gemäß einer nicht beanspruchten Lösung ist eine Scheibenwischvorrichtung vorgesehen, bei der das mindestens eine Befestigungsteil ein auf die Wischerwelle aufgesetztes Rohrelement und ein Verbindungselement aufweist, wobei das Verbindungselement einenends mit dem Wischarm verbunden ist und anderenends lösbar mit dem Rohrelement verbunden ist. Beim Aufprall des Fußgängers auf die Scheibenwischvorrichtung können sich das Verbindungselement und das Rohrelement voneinander lösen, sodass das Rohrelement zusammen mit der übrigen Scheibenwischvorrichtung der Aufprallkraft ausweichen kann, wodurch die Verletzungsgefahr für den Fußgänger deutlich reduziert wird.

Das Rohrelement und das Verbindungselement können miteinander verstemmt sein. Beim Aufprall löst sich die Verstemmung, so dass das Rohrelement und die übrige Scheibenwischvorrichtung der Aufprallkraft ausweichen können. Die Verstemmung gewährleistet außerdem eine zuverlässige Drehmomentenübertragung vom Rohrelement auf das Verbindungselement.

In einer weiteren Ausführung kann das Rohrelement schräg auf die Wischerwelle aufgesetzt sein. Dadurch wird im Wischbetrieb ein Wischgummi besser gegen eine Windschutzscheibe gedrückt, wodurch die Wischqualität bei einer hohen Wischergeschwindigkeit und/oder bei einer hohen Geschwindigkeit des Fahrzeuges optimiert wird.

Das Rohrelement kann vorzugsweise ein kostengünstiges Druckgussteil sein und/oder das Verbindungselement kann preiswert aus Blech gefertigt sein. Folglich kann das Befestigungsteil in großen Stückzahlen zu einem geringen Stückpreis gefertigt werden.

Insbesondere bei Gegenlaufanlagen, bei denen sich die Wischarme im Betrieb entgegengesetzt zueinander bewegen, kann das mit einem schräg auf die Wischerwelle aufgesetzten Rohrelement versehene Befestigungsteil preiswert hergestellt werden. Bisher waren bei Gegenlaufanlagen für das linke und das rechte Befestigungsteil zwei separate Werkzeuge erforderlich. Wenn jedoch das Befestigungsteil das Rohrelement und das Verbindungselement aufweist, können das linke und das rechte Befestigungsteil mit nur einem Werkzeug hergestellt werden. Dazu muss das Rohrelement jeweils nur um 180 Grad verdreht ins Verstemmwerkzeug eingelegt werden.

Nachfolgend werden verschiedene Ausführungsbeispiele anhand der beiliegenden Zeichnungen näher erläutert.

Im Einzelnen zeigen:
- Fig. 1: einen Längsschnitt durch eine erste Ausführungsform des Befestigungsteiles;
- Fig. 2: eine perspektivische Ansicht auf eine zweite nicht beanspruchte Ausführungsform des Befestigungsteiles;
- Fig. 3: eine Schnittansicht durch zwei Befestigungsteile einer Gegenlaufanlage.

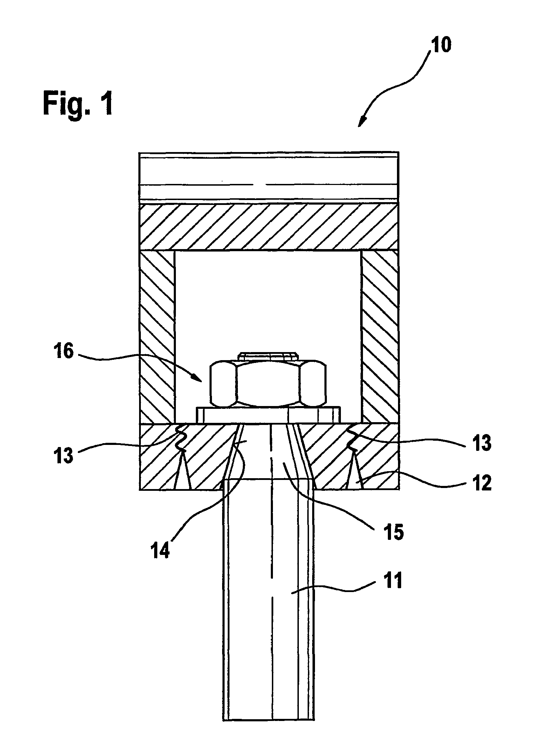

Fig. 1 zeigt ein Befestigungsteil 10 einer hier nicht näher gezeigten Scheibenwischvorrichtung. Das Befestigungsteil 10 verbindet einen hier nicht näher dargestellten Wischarm mit einer Wischerwelle 11. Es ist als ein Hohlzylinder ausgebildet. Das Befestigungsteil 10 weist an einer der Wischerwelle 11 zugewandten Seite eine als umlaufende Rille ausgebildete Sollbruchstelle 12 auf. An der Sollbruchstelle 12 versagt das Befestigungsteil 10 beim Aufprall eines Fußgängers. Damit ein Bruch des Befestigungsteils 10 schon bei geringen Aufprallkräften eingeleitet wird, verjüngt sich die Rille 12 zu ihrem Rillengrund hin. Schlangenlinien 13 stellen einen möglichen Bruch dar. Durch den Bruch wird das Befestigungsteil 10 von der Wischerwelle 11 mindestens teilweise gelöst. Je nach dem in welchem Winkel der Fußgänger auf das Befestigungsteil 10 aufprallt, wird das Befestigungsteil 10 entweder über die Wischerwelle 11 geschoben oder es weicht quer zur Wischerwelle 11 aus, so dass es beispielsweise seitlich weggebogen wird.

Um ein Drehmoment von der Wischerwelle 11 über das Befestigungsteil 10 auf den Wischarm übertragen zu können, ist das Befestigungsteil 10 mit einer konischen Bohrung 14 versehen. In die konische Bohrung 14 ist ein kegelförmiges Ende 15 der Wischerwelle 11 gesteckt. Mit einer Verschraubung 16 wird das kegelförmige Ende 15 feste in die konische Bohrung 14 gedrückt, wodurch eine zuverlässige Drehmomentenübertragung sichergestellt ist.

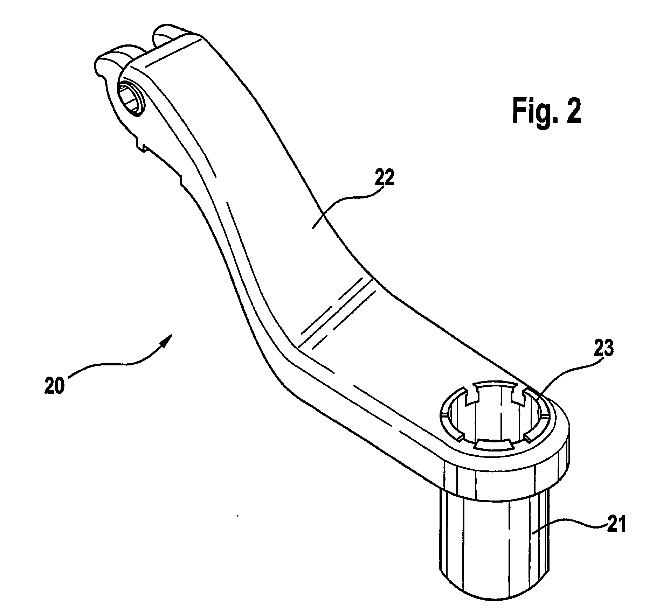

Fig. 2 zeigt ein Befestigungsteil 20, das ein Rohrelement 21 und ein Verbindungselement 22 aufweist. Das Rohrelement 21 kann auf eine hier nicht näher dargestellte Wischerwelle aufgesetzt werden. An das Verbindungselement 22 kann ein hier ebenfalls nicht gezeigter Wischarm montiert werden. Das Rohrelement 21 und das Verbindungselement 22 sind durch eine Verstemmung 23 lösbar miteinander verbunden. Beim Aufprall des Fußgängers auf die Scheibenwischvorrichtung können sich das Rohrelement 21 und das Verbindungselement 22 voneinander lösen. Auf diese Weise kann das Rohrelement 21 zusammen mit der übrigen Scheibenwischvorrichtung der Aufprallkraft ausweichen, wodurch die Verletzungsgefahr für den Fußgänger reduziert wird. Außerdem gewährleistet die Verstemmung 23 eine zuverlässige Drehmomentenübertragung von dem Rohrelement 21 auf das Verbindungselement 22. Zur Verstemmung zwischen dem Rohrelement 21 und dem Verbindungselement 22 können alle dem Fachmann bekannten Verstemmungsarten verwendet werden. Das Rohrelement 21 kann bevorzugt ein kostengünstiges Druckgussteil sein und/oder das Verbindungselement 22 ein preiswertes Blechteil. Das Rohrelement 21 weist vorteilhafterweise eine konische Bohrung zur Aufnahme des konischen Endes der Wischerwelle auf.

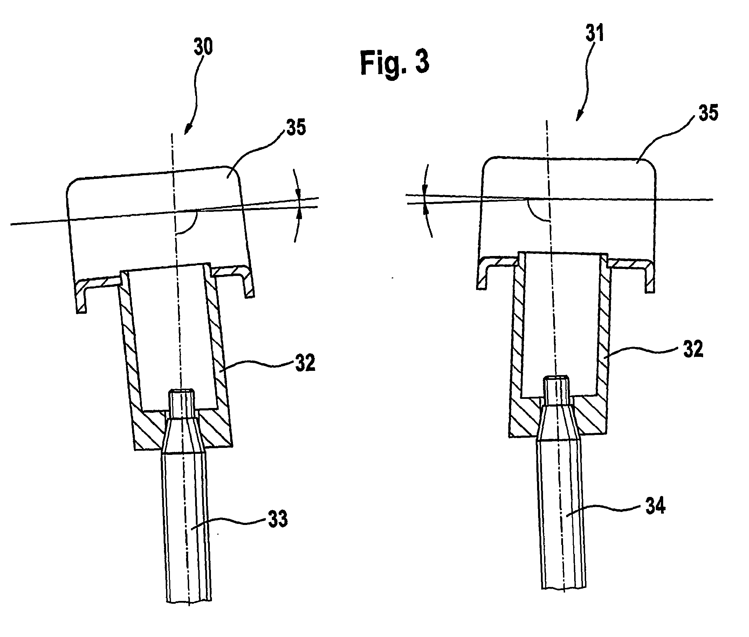

Fig. 3 zeigt zwei Befestigungsteile 30 und 31 einer Gegenlaufanlage, bei der sich die Wischarme im Betrieb entgegengesetzt zueinander bewegen. Bei den Befestigungsteilen 30 und 31 sind Rohrelemente 32 schräg auf Wischerwellen 33 und 34 aufgesetzt. Dadurch wird im Wischbetrieb ein Wischgummi besser gegen eine Windschutzscheibe gedrückt, sodass die Wischqualität bei hohen Wischergeschwindigkeiten und/oder bei hohen Fahrzeuggeschwindigkeiten optimiert wird. Durch die einfache Konstruktion der Rohrelemente 32 und Verbindungselemente 35 können die Befestigungsteile 30 und 31 insbesondere für Gegenlaufanlagen preiswert hergestellt werden. Bisher waren bei Gegenlaufanlagen für das linke und das rechte Befestigungsteil zwei separate Werkzeuge erforderlich. Wenn jedoch die Befestigungsteile 30 und 31 für eine Gegenlaufanlage verwendet werden sollen, können sowohl das linke als auch das rechte Befestigungsteil mit nur einem Werkzeug hergestellt werden. Dazu muss bei der Herstellung das Rohrelement jeweils nur um 180 Grad verdreht ins Verstemmwerkzeug eingelegt werden.

## Patentansprüche

1. Scheibenwischvorrichtung, insbesondere für ein Kraftfahrzeug, mit mindestens einem Befestigungsteil (10) zur Befestigung eines Wischarms auf einer Wischerwelle (11), wobei das mindestens eine Befestigungsteil (10) mit einer Sollbruchstelle (12) versehen ist und somit bei einem Aufprall auf das mindestens eine Befestigungsteil (10) das Befestigungsteil (10) von der Wischerwelle (11) lösbar ist,
wobei das Befestigungsteil (10) nach dem Brechen der Sollbruchstelle (12) über die Wischerwelle (11) schiebbar ist.

2. Scheibenwischvorrichtung nach Anspruch 1, **dadurch gekennzeichnet, dass** das Befestigungsteil (10) einen Hohlzylinder aufweist, der auf die Wischerwelle (11) aufgesetzt ist.

3. Scheibenwischvorrichtung nach Anspruch 2, **dadurch gekennzeichnet, dass** der Hohlzylinder an einer der Wischerwelle (11) zugewandten Stirnseite die umlaufende Sollbruchstelle (12) aufweist.

4. Scheibenwischvorrichtung nach Anspruch 3, **dadurch gekennzeichnet, dass** die umlaufende Sollbruchstelle (12) eine umlaufende Rille ist.

## Claims

1. Windscreen wiper device, in particular for a motor vehicle, with at least one fastening part (10) for fastening a wiper arm to a wiper shaft (11), wherein the at least one fastening part (10) is provided with a predetermined breaking point (12) and therefore, in the event of an impact against the at least one fastening part (10), the fastening part (10) is detachable from the wiper shaft (11), wherein the fastening part (10) is pushable over the wiper shaft (11) after the predetermined breaking point (12) breaks.

2. Windscreen wiper device according to Claim 1, **characterized in that** the fastening part (10) has a hollow cylinder which is placed onto the wiper shaft (11).

3. Windscreen wiper device according to Claim 2, **characterized in that** the hollow cylinder has the peripheral predetermined breaking point (12) on an end side facing the wiper shaft (11).

4. Windscreen wiper device according to Claim 3, **characterized in that** the peripheral predetermined breaking point (12) is a peripheral groove.

## Revendications

1. Dispositif d'essuie-glace, en particulier pour un véhicule automobile, comprenant au moins une partie de fixation (10) pour la fixation d'un bras d'essuie-glace à un arbre d'essuie-glace (11), l'au moins une partie de fixation (10) étant pourvue d'un point de rupture (12) et ainsi, en cas de collision sur l'au moins une partie de fixation (10), la partie de fixation (10) pouvant être détachée de l'arbre d'essuie-glace (11),
la partie de fixation (10) pouvant être poussée par-dessus l'arbre d'essuie-glace (11) après la rupture du point de rupture (12).

2. Dispositif d'essuie-glace selon la revendication 1, **caractérisé en ce que** la partie de fixation (10) présente un cylindre creux, qui est posé sur l'arbre d'essuie-glace (11).

3. Dispositif d'essuie-glace selon la revendication 2, **caractérisé en ce que** le cylindre creux présente, au niveau d'un côté frontal tourné vers l'arbre d'essuie-glace (11), le point de rupture périphérique (12).

4. Dispositif d'essuie-glace selon la revendication 3, **caractérisé en ce que** le point de rupture périphérique (12) est une gorge périphérique.
